# FASCICULE DE BREVET EUROPEEN

(11) **EP 0 433 136 B1**
(45) Date de publication et mention de la délivrance du brevet: **14.02.1996**
(21) Numéro de dépôt: 90403460.0
(22) Date de dépôt: 06.12.1990
(51) Int. Cl.: B32B 17/10, C03C 27/12

(54) **Vitrage auto feuilleté chauffant électriquement**
Elektrisch beheizte Autoverbundscheibe
Electrically heated laminated car windscreen

(30) Priorité: 09.12.1989 DE 3940748
(43) Date de publication de la demande: 19.06.1991
(73) Titulaire: SAINT-GOBAIN VITRAGE INTERNATIONAL, F-92400 Courbevoie (FR); VEGLA Vereinigte Glaswerke GmbH, D-52066 Aachen (DE)
(72) Inventeur: Termath,Günter, Dr., W-4650 Gelsenkirchen (DE)
(74) Mandataire: Muller, René

(56) Documents cités:
- EP-A- 0 076 496
- EP-A- 0 077 672
- EP-A- 0 104 870

## Description

L'invention concerne un vitrage feuilleté chauffant électriquement, en particulier un vitrage automobile, constitué de deux feuilles de verre associées par une feuille thermoplastique en polyvinylbutyral dont l'une est revêtue sur sa surface située du côté du polyvinylbutyral de couches minces déposées par un procédé de pulvérisation cathodique comportant : une couche d'argent, une couche d'oxyde de zinc anti-reflets comportant éventuellement une couche intercalaire d'un métal ou d'un oxyde métallique sous-stoechiométrique, et une couche destinée à améliorer la liaison avec le polyvinylbutyral placée sur la couche d'oxyde de zinc anti-reflets.

Il est connu et éprouvé de constituer des couches destinées à chauffer électriquement des vitrages automobiles grâce à des méthodes de pulvérisation cathodique assistée par un champ magnétique ou par la pulvérisation cathodique réactive également assistée par champ magnétique. Une composition particulièrement efficace comporte tout d'abord une couche anti-reflets en oxyde de zinc placée sur la surface du verre puis une couche d'argent déposée sur l'oxyde de zinc et enfin une couche superficielle également anti-reflets et également faite d'oxyde de zinc. Une telle combinaison fait l'objet des brevets US 4 654 067, 4 668 270 et 4 744 844.

On connaît par ailleurs des couches multiples du même type dans lesquelles on interpose entre la couche d'argent et la couche superficielle anti-reflets une couche mince faite d'un métal ou d'un oxyde métallique sous-oxydé. Sa fonction est de protéger l'argent de l'action de l'oxygène lors du dépôt réactif de la couche superficielle anti-reflets (Brevet Européen EP 0 104 870).

On connaît également grâce à la demande de Brevet Européen EP 0 263 623 un vitrage feuilleté du type décrit ci-dessus dans lequel on ajoute à la couche superficielle d'oxyde de zinc une couche destinée à améliorer l'adhérence sur le polyvinylbutyral (PVB). Il s'agit en l'occurrence d'une couche d'oxydes de chrome dont l'épaisseur est comprise entre 2,5 et 10 nanomètres. Mais on est, en réalité en présence d'un complexe ou d'un mélange de chrome métallique et d'oxydes avec différents taux d'oxydation (CrO, CrO₂, CrO₃ et Cr₂O₃). La fonction de cette couche superficielle à base d'oxydes de chrome est de fournir la solution au problème bien connu des spécialistes lié au vieillissement des verres feuilletés comportant des couches minces en contact avec le PVB lorsqu'on les expose à la lumière et au rayonnement ultra-violet. On constate dans de telles conditions une dégradation de l'adhérence telle que les performances du verre feuilleté deviennent insuffisantes pour un verre de sécurité.

L'invention se donne pour mission de permettre la production d'un vitrage feuilleté du type décrit ci-dessus, qui soit équipé de couches améliorant l'adhérence au polyvinylbutyral et qui possède des propriétés d'adhérence équivalentes ou meilleures que celles du vitrage équipé des couches d'oxydes de chrome évoqué ci-dessus et qui de plus puisse être fabriqué sans difficulté par les techniques de pulvérisation cathodique.

Le but de l'invention est atteint grâce à une couche mince nouvelle qui améliore l'adhérence au PVB, elle est constituée de métaux du groupe IV, V ou VIII de la classification périodique ou bien d'un oxyde de ces mêmes métaux.

La technique de l'invention à permis d'atteindre des améliorations des performances d'adhérence entre les couches minces et le polyvinylbutyral qui sont du même ordre que celles de l'adhérence entre une surface de verre vierge et ce même PVB. Cet objectif est atteint aussi bien avec les métaux qu'avec leurs oxydes.

Une des exigences que doivent remplir les couches d'adhérence est de ne pas modifier les performances optiques des couches multiples c'est-à-dire leur transmission lumineuse ainsi que l'intensité et la répartition spectrale de la lumière réfléchie. Les couches métalliques ont cependant une influence importante sur la transmission et la réflexion lumineuse. C'est pourquoi lorsque la couche d'adhérence est constituée d'un métal, il est important que l'épaisseur demeure faible par exemple de 1 à 3 nanomètres.

Il se trouve que les oxydes métalliques ont une transparence bien supérieure à celles des métaux et c'est pourquoi plus le taux d'oxydation du métal de la couche est élevé et plus son épaisseur peut être accrue. Les couches d'oxydes métallique dont le métal est complètement oxydé, c'est-à-dire que la stoechiométrie est atteinte, peuvent posséder une épaisseur bien supérieure à 3 nanomètres. Les performances exigées du vitrage feuilleté c'est-à-dire une modification nulle ou faible de la transmission lumineuse ainsi que l'absence d'influence sur la couleur aussi bien en transmission qu'en réflexion peuvent être obtenues de couches d'adhérence faites d'oxydes métalliques stoechiométriques même lorsque leur épaisseur, qui dépend de la nature du métal, atteint 10 nanomètres.

On obtient de très bons résultats du point de vue de l'adhérence et des propriétés optiques du verre feuilleté lorsque la couche selon l'invention est constituée de titane, de nickel ou d'un alliage de nickel et de chrome ou bien d'un oxyde de l'un de ces métaux. On a obtenu des résultats particulièrement satisfaisants avec une couche d'adhérence en tantale ou en oxyde de tantale. Il est évident que des alliages des métaux mentionnés ou des mélanges de leurs oxydes peuvent être utilisés et que les résultats obtenus ainsi qu'alors les propriétés du verre feuilleté final sont les mêmes.

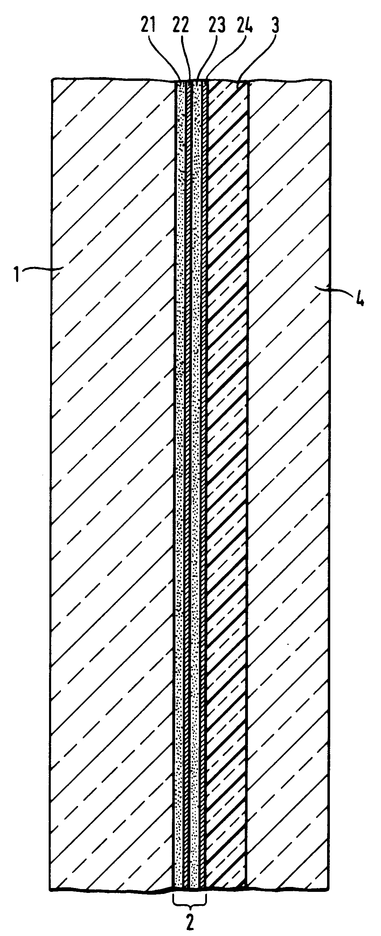

Le fonctionnement de l'invention apparaîtra clairement grâce au dessin et aux exemples de réalisation qui suivent.

Le dessin montre la constitution d'un pare-brise d'automobile conforme à l'invention. Il s'agit d'une coupe.

La feuille de verre unitaire (1) est équipée sur une de ses faces de la couche multiple (2). Cette feuille est placée à l'extérieur de la voiture lorsque le pare-brise est pose. La couche multiple (2) est en contact avec la feuille thermoplastique intercalaire (3) en polyvinylbutyral à laquelle elle est liée. Du côté du pare-brise à l'intérieur de la voiture est placée la feuille de verre unitaire (4) qui est elle, en contact direct avec l'intercalaire (3) à laquelle elle adhère. Les différents composants du vitrage feuilleté sont associés les uns aux autres de manière connue grâce à la chaleur et la pression fournies par un autoclave.

La couche multiple (2) comprend tout d'abord la couche (21) en oxyde de zinc d'une épaisseur de 35 nanomètres. Elle est placée sur la surface du verre. Ensuite on trouve la couche (22) en argent avec une épaisseur d'environ 8 nanomètres et enfin la couche anti-reflets de protection (23) également en oxyde de zinc avec une épaisseur d'environ 35 nanomètres. La couche d'adhérence (24) faite d'un métal ou d'un oxyde métallique est placée sur la couche anti-reflets (23). Lorsque la couche (24) est métallique, elle a une épaisseur de 1 à 3 nanomètres. Si au contraire elle est faite d'un oxyde son épaisseur est comprise entre 1 et 10 nanomètres.

L'amélioration des propriétés d'adhérence sur le polyvinylbutyral ainsi que les mesures optiques sont données lors de la présentation des exemples qui suivent.

La mesure de la transmission lumineuse est effectuée à l'aide des appareils de mesure habituels. Pour mesurer l'adhérence entre la surface du verre équipée de ses couches et la feuille de PVB on a utilisé un test courant dans l'industrie du verre feuilleté, le test PUMMEL. Ce test consiste à soumettre un échantillon du vitrage feuilleté qui a été porté à une température de -20°C à l'action d'un marteau de 300 grammes puis de déterminer la fraction des fragments qui continue à adhérer à la feuille plastique. Lorsqu'aucun fragment n'adhère plus au PVB la valeur PUMMEL est zéro. En revanche si tous les fragments continuent à adhérer, la valeur PUMMEL est 10. Les normes de sécurité des pares-brises imposent que la valeur PUMMEL soit d'au moins 4 ce qui correspond à 40% de fragments qui gardent leur adhérence sur le PVB à l'issue du test.

On a procédé à des essais PUMMEL après des expositions de longue durée à la lumière (100, 200, 300 et 400 heures). Les conditions d'éclairement étaient celles du "Light Stability Test n° 1" (American National Standards Institut, ANSI Z 26.1a - 1980).

Dans tous les cas, il s'agissait de pare-brise chauffants équipés de couches ZnO-Ag-ZnO; à l'exception du vitrage comparatif tous les pare-brise étaient équipés de la couche d'adhérence.

### EXEMPLE COMPARATIF

La comparaison a été effectuée avec un verre feuilleté qui ne comportait pas la couche d'adhérence. Sa transmission lumineuse était de 77 %. Avant exposition à la lumière, le PUMMEL à l'interface verre à couches - PVB, était de 3. A la fin de la première exposition de 100 heures le PUMMEL était déjà descendu à une valeur de 1. Cette valeur subsiste pour tous les éclairements jusqu'à 400 heures. Sur l'autre face du polyvinylbutyral c'est à dire à l'interface PVB - verre, la valeur était au départ de 8 et même après un éclairement de 400 heures elle n'avait pratiquement pas baissé.

### EXEMPLE 1

L'échantillon était ici équipé d'une couche d'adhérence en titane essentiellement métallique d'une épaisseur de 2 nanomètres. La mesure de la transmission effectuée sur le verre feuilleté terminé était de 77 %. La valeur du PUMMEL était au début d'environ 8 et a baissé après 200 heures à 7 et après 400 heures à 6.

### EXEMPLE 2

Cette fois-ci la couche d'adhérence était en oxyde de titane d'une épaisseur d'environ 4 nanomètres. Cette couche était obtenue par pulvérisation cathodique réactive à partir d'une cathode en titane métallique et dans une atmosphère comportant une pression partielle faible d'oxygène. Ici aussi la transmission demeurait inchangée à 77 %. La valeur PUMMEL qui était de 7,5 avant l'irradiation est descendue à 6,5 après 200 heures et à environ 5 après 400 heures.

### EXEMPLE 3

L'échantillon a été pourvu d'une couche d'adhérence en nickel-chrome essentiellement métallique, elle est obtenue par pulvérisation cathodique à partir d'une cible faite d'un alliage de nickel et de chrome dans les proportions 80-20. L'épaisseur de cette couche était d'environ 1,5 nanomètres. La transmission lumineuse avait diminué jusqu'à 75,4 %. Le test PUMMEL avant exposition à la lumière était de 4 environ. Cette valeur restait pratiquement inchangée pendant toute l'irradiation.

### EXEMPLE 4

Un échantillon a été équipé d'une couche d'adhérence en tantale métallique. Cette couche avait une épaisseur d'environ 1,5 nanomètres. En comparaison avec l'échantillon de référence, la mesure de la transmission lumineuse demeurait inchangée avec cependant une légère tendance à s'accroître. Avant le début de l'irradiation le test PUMMEL était de 8 cette valeur n'a pas changé au cours des étapes d'illumination suivantes et même après 400 heures un PUMMEL de 8 subsistait.

### EXEMPLE 5

Par une technique de pulvérisation cathodique réactive à partir d'une cible en tantale, on a déposé une couche d'adhérence d'oxyde de tantale d'une épaisseur d'environ 5 nanomètres. L'échantillon terminé montrait une légère augmentation de la transmission lumineuse en comparaison avec l'échantillon de référence. De même les valeurs d'adhérence mesurées grâce au test PUMMEL ont montré que le collage était particulièrement fort puisqu'une valeur de PUMMEL de 8 était encore observée après une irradiation de 400 heures.

## Revendications

1. Vitrage feuilleté, chauffant électriquement, et en particulier vitrage automobile, constitué de deux feuilles de verre unitaires (1, 4) associées par une feuille thermoplastique en polyvinylbutyral (3), l'une des feuilles (1) étant revêtue sur sa surface située du côté du polyvinylbutyral (3) de couches minces déposées par un procédé de pulvérisation cathodique comportant une couche d'argent (22), une couche d'oxyde de zinc anti-reflets (23), éventuellement une couche supplémentaire d'un métal ou d'un oxyde métallique sous-stoechiométrique, et une couche (24) destinée à améliorer l'adhérence avec le polyvinylbutyral et placée sur la couche d'oxyde de zinc anti-reflets (23), **caractérisé en ce que** la couche (24) destinée à améliorer l'adhérence est faite de métal ou d'alliage métallique, appartenant au groupe IV, V ou VIII de la classification périodique ou bien d'un oxyde d'un de ces métaux ou un mélange de ces oxydes.

2. Vitrage feuilleté selon la revendication 1, **caractérisé en ce que** l'épaisseur de la couche (24) métallique placée sur la couche anti-reflets (23) est de 1 à 3 nanomètres.

3. Vitrage feuilleté selon la revendication 1, **caractérisé en ce que** l'épaisseur de la couche (24) d'oxyde(s) métallique(s) placée sur la couche anti-reflets (23) est de 1 à 10 nanomètres.

4. Vitrage feuilleté selon l'une des revendications 1 à 3, **caractérisé en ce que** la couche (24) destinée à améliorer l'adhérence placée sur la couche anti-reflets (23) est faite de titane, de tantale, de nickel ou de nickel-chrome, ou d'un oxyde de ces métaux.

5. Vitrage feuilleté selon l'une des revendications précédentes, **caractérisé en ce qu**'entre verre (1) et couche d'argent (22) est disposée une seconde couche d'oxyde de zinc anti-reflets (21).

## Claims

1. Electrically heatable laminated glazing, especially automobile glazing, consisting of two single sheets of glass (1,4) bonded together by a thermoplastic film (3) of polyvinylbutyral, one of which sheets (1) being provided or its surface facing the polyvinylbutyral film (3) with thin layers applied by a method of cathodic sputtering comprising a layer of silver (22), an anti-reflective layer (23) of zinc oxide, possibly a supplementary layer of a metal or sub-stoichiometric metal oxide layer; and a layer (24) for improving the bonding with the polyvinylbutyral film and disposed on the anti-reflective layer of zinc oxide characterised in that the layer (24) for improving the bonding is made of metal or a metal alloy belonging to a group IV, V or VIII of the periodic system or else of an oxide of one of these metals or a mixture of theseoxides.

2. Laminated glazing according to claim 1 characterised in that the thickness of the metallic layer (24) disposed on the anti-reflective layer (23) is from 1 to 3 nanometres.

3. Laminated glazing according to claim 1 characterised in that the thickness of the metal oxide layer (24) disposed on the anti-reflective layer (23) is from 1 to 10 nanometres.

4. Laminated glazing according to any one of claims 1 to 3 characterised in that the layer (24) for improving the bonding disposed on the anti-reflective layer (23) is made of titanium, tantalum, nickel or nickel-chromium or an oxide of these metals.

5. Laminated glazing according to any one of the preceding claims, characterised in that between the glass (1) and the silver layer (22) is disposed a second anti-reflective layer (21) of zinc oxide.

## Patentansprüche

1. Elektrisch beheizbare Verbundglasscheibe, insbesondere Autoglasscheibe, aus zwei über eine thermoplastische Kunststoffolie aus Polyvinylbutyral (3) miteinander verbundenen Einzelglasscheiben (1,4), von denen eine Einzelglasscheibe (1) auf ihrer an der Polyvinylbutyralfolie (3) anliegenden Seite mit durch ein Katodenzerstäubungsverfahren aufgebrachten dünnen Schichten versehen ist, die eine Silberschicht (22), eine Entspiegelungsschicht (23) aus Zinkoxid, gegebenenfalls eine zusätzliche metallische oder unterstöchiometrisch oxidierte metalloxidische Schicht und eine auf der Entspiegelungsschicht (23) aus Zinkoxid angeordnete, die Haftung zum Polyvinylbutyral verbessernde Schicht (24) umfassen, **dadurch gekennzeichnet**, daß die die Haftung verbessernde Schicht (24) aus einem zu der Gruppe IV, V oder VIII des periodischen Systems gehörenden Metall oder einer Metallegierung, oder aus einem Oxid eines dieser Metalle oder einer Mischung dieser Oxide besteht.

2. Verbundglasscheibe nach Anspruch 1, dadurch gekennzeichnet, daß die Dicke der auf der Entspiegelungsschicht (23) angeordneten metallischen Schicht (24) 1 bis 3 nm beträgt.

3. Verbundglasscheibe nach Anspruch 1, dadurch gekennzeichnet, daß die Dicke der auf der Entspiegelungsschicht (23) angeordneten metalloxidischen Schicht(en) 1 bis 10 nm beträgt.

4. Verbundglasscheibe nach einem der Ansprüche 1 bis 3, dadurch gekennzeichnet, daß die auf der Entspiegelungsschicht (23) angeordnete die Haftung verbessernde Schicht (24) aus Titan, Tantal, Nickel oder Nickel-Chrom, oder aus einem Oxid dieser Metalle besteht.

5. Verbundglasscheibe nach einem der voraufgehenden Ansprüche, dadurch gekennzeichnet, daß zwischen der Glasscheibe (1) und der Silberschicht (22) eine zweite Entspiegelungsschicht (21) aus Zinkoxid angeordnet ist.
